# EUROPEAN PATENT APPLICATION

(11) **EP 0 860 470 A1**
(43) Date of publication of application: **26.08.1998**
(21) Application number: 98301242.8
(22) Date of filing: 20.02.1998
(51) Int. Cl.: C08L 25/02, C08K 13/02

(54) **Flame-retarded styrene-based polymer and copolymer compositions**

(30) Priority: 24.02.1997 FR 9702155
(71) Applicant: GENERAL ELECTRIC COMPANY, Schenectady, NY 12345 (US)
(72) Inventor: Lo, Tung Fai, 60940 Angicourt (FR)
(74) Representative: Szary, Anne Catherine, Dr.

(57) **Abstract**

The composition includes:
(A) a styrene-based polymer, a styrene-based copolymer or a mixture thereof;
(B) 0.01 to 10 parts by weight, per 100 parts by weight of the component (A), of an agent for neutralizing acidity, chosen from the group consisting of the oxides, the hydroxides and the carbonates of metals of groups II and III of the Periodic Classification of the elements and mixtures thereof; and
(C) 1 to 25 parts by weight, per 100 parts by weight of the component (A), of a flame-retardant phosphate chosen from the phosphates of formula: 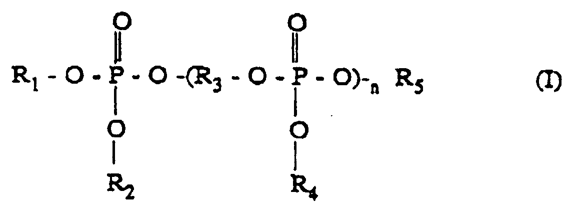 in which R₁, R₂, R₃, R₄ and R₅ are chosen, independently of one another, from alkyl groups or an aryl groups substituted by one alkyl and/or hydroxyl group and n is an integer from 0 to 5, and mixtures thereof.

Application to moulding and to extrusion.

## Description

The present invention relates to flame-retarded styrene-based polymer and copolymer compositions which are totally free from halogen, which have low rates of combustion according to the standard IEC 65 or UL 94, without detriment to the mechanical properties of the articles obtained from these compositions.

Styrene-based polymer and copolymer compositions are generally flame-retarded by the addition of halogen-containing compounds, for example of bromine- and/or chlorine-containing compounds, in particular organic compounds.

The use of halogen-containing flame retardants has the disadvantage of entailing pollution risks, due in particular to release of halogen-containing products on burning.

Document US-5 204 394 describes the use of an oligomeric phosphate or of a mixture of oligomeric phosphates as flame retardant for blends of polycarbonate and of a styrene copolymer.

Surprisingly, the Applicant Company has found that is it possible to impart flame retardancy to styrene-based polymer and copolymer compositions which are totally free from halogen by means of a combination of specific phosphates and of an effective quantity of an agent for neutralizing acidity.

According to the invention a composition is produced which is totally free from halogen, which includes:
(A) a styrene-based polymer, a styrene-based copolymer or mixtures thereof;
(B) 0.01 to 10 parts by weight, per 100 parts by weight of the component (A), of an agent for neutralizing acidity, chosen from the oxides, the hydroxides and the carbonates of metals of groups II and III of the Periodic Classification of the elements and mixtures thereof; and
(C) 1 to 25 parts by weight, per 100 parts by weight of component (A), of a flame-retardant phosphate chosen from the phosphates of formula: 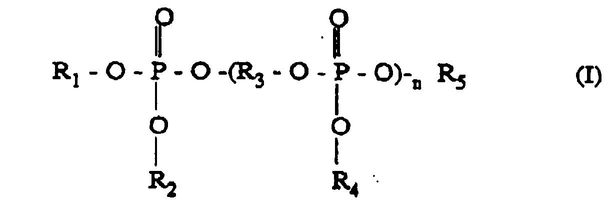
in which R₁, R₂, R₃, R₄ and R₅ are, independently of one another, an aryl group or an aryl group substituted by one or more alkyl and/or hydroxyl groups and n is an integer from 0 to 5, and mixtures thereof.

R₁, R₂, R₃, R₄ and R₅ are preferably C₆-C₁₂ aryl groups and very particularly a phenyl group or the above aryl groups substituted by one or more C₁-C₅ alkyl and/or hydroxyl groups.

The groups R₁, R₂, R₃, R₄ and R₅ which are particularly recommended are the phenyl and the orthohydroxyphenyl group, and n is preferably 0 or 1.

The styrene-based polymers and copolymers which can be used in the present invention are well known.

Styrene homopolymers, alkylstyrene homopolymers such as α-methylstyrene, high-impact polystyrenes (HIPS) and styrene graft polymers may be mentioned among the styrene-based polymers and copolymers which can be used in the compositions of the present invention.

A recommended class of styrene-based polymers which can be used in the compositions of the present invention are the high-impact polystyrenes (HIPS) . These polymers, with high impact strength are generally prepared by the graft polymerization of mixtures of styrene and optionally of one or a number of additional copolymerizable vinyl monomers in the presence of a rubbery polymer backbone.

Similar resins can also be prepared by mixing a rigid matrix polymer with a grafted rubbery backbone.

The copolymers which can be employed in mixtures with styrene for the preparation of rigid styrene-based copolymers and for use as grafting monomers include monomers chosen from the ethylstyrene form, vinylalkylbenzenes such as vinyltoluene and vinylxylene, and butylstyrene, acrylonitrile, methacrylonitrile, the lower alkyl esters of methacrylic acid and mixtures thereof. In the styrene-based resins with high impact strength the rubbery polymer backbone normally constitutes from 5 to 80 %, preferably 5 to 50 %, of the total weight of the graft polymer, and includes rubbery copolymers chosen from polybutadiene, polyisoprene, rubbery styrene-diene copolymers, acrylic rubber, nitrile rubber and olefin rubbers such as PDM and PR. In addition, other styrene-based polymers which are known in the art can be employed in the blend compositions of the invention.

Resins of acrylonitrile/butadiene/styrene (ABS) emulsion and bulk polymer type, methyl methacrylate/ butadiene/acrylonitrile/styrene (MABS) resins, resins of styrene/butadiene (HIPS) graft polymer type and methyl methacrylate/butadiene/styrene (MBS) resins may be mentioned as specific examples of graft polymers which can be used in the compositions of the present invention.

Polystyrene and styrene copolymers such as styrene/acrylonitrile (SAN) copolymers, styrene/ methacrylic ester copolymers, resins of styrene/ acrylonitrile/maleic anhydride (SAMA) terpolymer type, resins of styrene/maleic anhydride (SMA) copolymer type and similar polymers including N-phenyl substituted and differently substituted and similar maleimides, and mixtures thereof, may be mentioned as specific examples of styrene polymers and copolymers which can be employed in the present invention. In addition, it is also possible to employ styrene-butadiene-styrene (SBS) copolymers and synthetic butyl rubbers (SBR). Furthermore, it is also possible to employ similar copolymer resins in which a proportion of the styrene-based monomer component is replaced with other styrene-based monomers such as α-methylstyrene or vinyltoluene. It is also possible to employ mixtures or blends of the above styrene-based polymers.

The styrene-based polymers which can be used in the present invention also include the polymers with a core and shell structure. The styrene-based polymers are generally prepared by polymerization in emulsion, in bulk, bulk-emulsion or bulk-suspension.

The styrene-based polymers which are particularly recommended for the compositions of the present invention are the ABS resins in particular the ABS resins containing from 1 to 80 % by weight of butadiene in relation to the total weight of the resin, and the blends of ABS resins and of styrene/ acrylonitrile (SAN) copolymers. When the ABS resin is in powder form, it preferably contains 10 to 80 % by weight of butadiene. When the ABS resin is in the form of granules it preferably contains 1 to 40 % by weight of butadiene and, better still, 1 to 30 % by weight.

The blends which are particularly recommended for the compositions of the invention are the ABS/SAN blends containing 5 to 80 parts by weight of ABS resin and 95 to 20 parts by weight of SAN copolymer. The resins which are recommended by the compositions of the invention are preferably ABS/SAN blends containing 5 to 40 parts by weight of ABS resin and 95 to 60 parts by weight of SAN copolymer.

Among the polymers of acrylic and methacrylic copolymers which can be used in the present invention may be mentioned the copolymers of the derivatives of acrylic acid, for example acrylic esters, with styrene, the derivatives of methacrylic acid and the esters of acetic acid and poly(alkyl methacrylates) such as poly(methyl methacrylate) and poly(alkyl acrylates).

Among the vinyl polymers and copolymers may be mentioned poly(vinyl acetate), poly(vinylbenzenes), ethylene-vinyl acetate copolymers and polyvinyl alcohols.

The flame-retarded compositions according to the invention must include 0.01 to 10 parts by weight, preferably 0.05 to 6 parts by weight and, better, from 1 to 6 parts by weight, per 100 parts by weight of the component (A), of a neutralizing agent (B) chosen from the group consisting of the oxides, hydroxides and carbonates of the metals of groups II and III of the Periodic Classification and mixtures thereof.

Within the scope of the present invention the oxides, hydroxides and carbonates of the metals of groups II and III of the Periodic Classification include the simple oxides, hydroxides and carbonates of these metals, as well as mixed compounds such as the hydroxycarbonates of one or more of the metals of groups II and III.

MgOH, MgO, Al₂O₃, Al(OH)₃, MgCO₃, CaCO₃, ZnO and hydrotalcites and mixtures thereof may be mentioned by way of example of recommended neutralizing agents.

The agents which are particularly recommended are MgO and hydrotalcites.

The compositions according to the invention may additionally optionally include from 0.1 to 2 parts by weight of a lubricant per 100 parts by weight of the component (A). Among the lubricants that can be employed may be mentioned alkylene fatty amides such as ethylene bisstearamide wax, Mg, Zn, Ba and Na stearates, butyl stearate, glycerol monostearate, stearyl alcohol, octyl behenate, silicone oils and mixtures thereof.

The flame retardant is chosen from the polyphosphates of formula (I). The recommended phosphates are the phosphates of formulae: 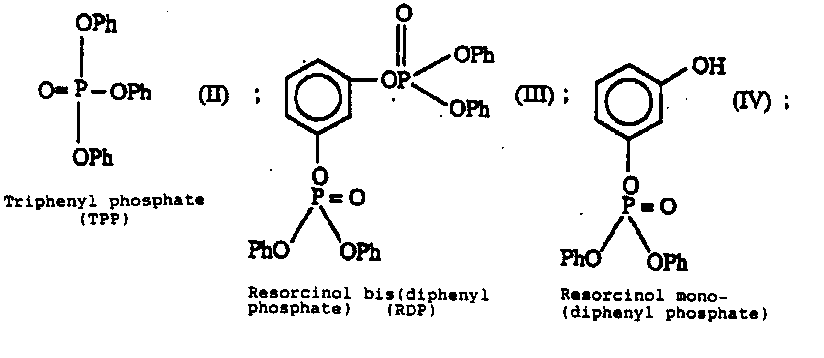 and mixtures thereof.

The preferred phosphates are resorcinol bis(diphenyl phosphate), resorcinol mono(diphenyl phosphate) and mixtures thereof.

As indicated above, the composition includes, per 100 parts by weight of component (A), 1 to 25 parts by weight of phosphate flame retardant, preferably 2 to 15 parts by weight.

The compositions according to the invention may additionally comprise from 0 to 10, preferably 0 to 5 parts by weight, per 100 parts by weight of component (A), of an additional flame retardant chosen from boron phosphate (PBO₄) and zinc phosphate. It has been found that the addition of inorganic phosphates results in a synergy with regard to the flame retardancy of the compositions according to the invention.

The compositions according to the invention may also contain, in the usual quantities, adjuvants which are generally employed in styrene-based polymer and copolymer compositions, such as pigments, dyes, UV stabilizers, antioxidants, antistatic agents, coupling agents, impact strength modifiers and extending and/or reinforcing fillers.

Talc, barium sulphate, mica and the like may be mentioned among the conventional inorganic fillers which can be employed in the compositions of the present invention.

Ethoxylated amines and alkylsulphonates may be mentioned among the antistatic agents that can be employed.

The compositions of the present invention may also contain dyes and pigments such as, for example, titanium oxide, ultramarine blue and carbon black.

The following examples are intended to illustrate the invention. Unless stated otherwise, all the percentages and proportions in the examples are expressed by weight.

### Comparative Examples A, B and C and Examples 1 to 13

The compositions of Table I below are prepared by mixing or hot extrusion, at a temperature of 150 to 300°C, by means of an internal mixer or of a single-screw or twin-screw extruder.

The hot melt index of the compositions was measured. The compositions were moulded into standardized test pieces and the Izod impact strength and the Vicat temperature were determined. The compositions were also moulded into standardized test pieces of 1.6 mm thickness and 2.4 mm thickness for the UL 94 test and of 3.1 mm for the IEC 65 test. The results are given in Table I below.

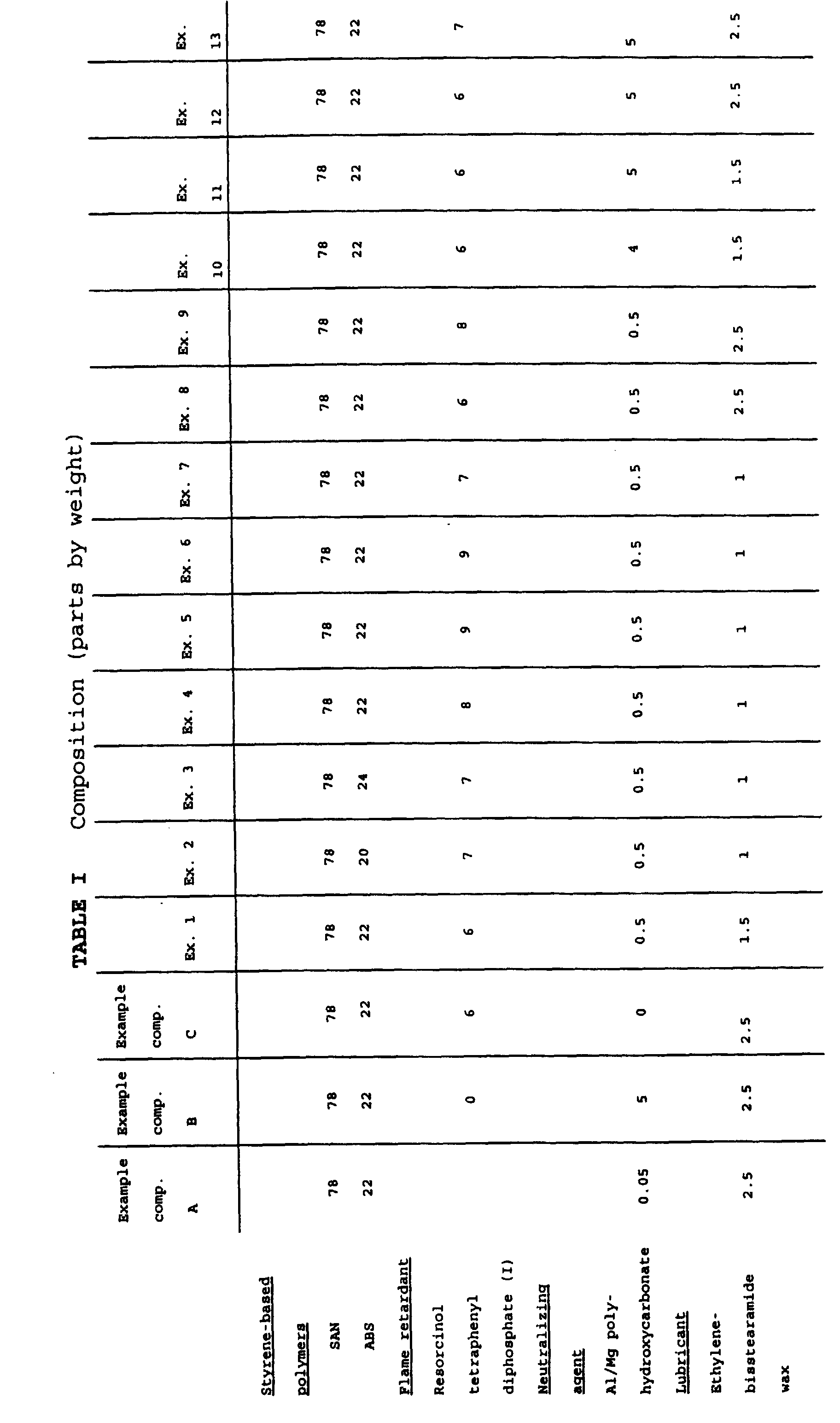

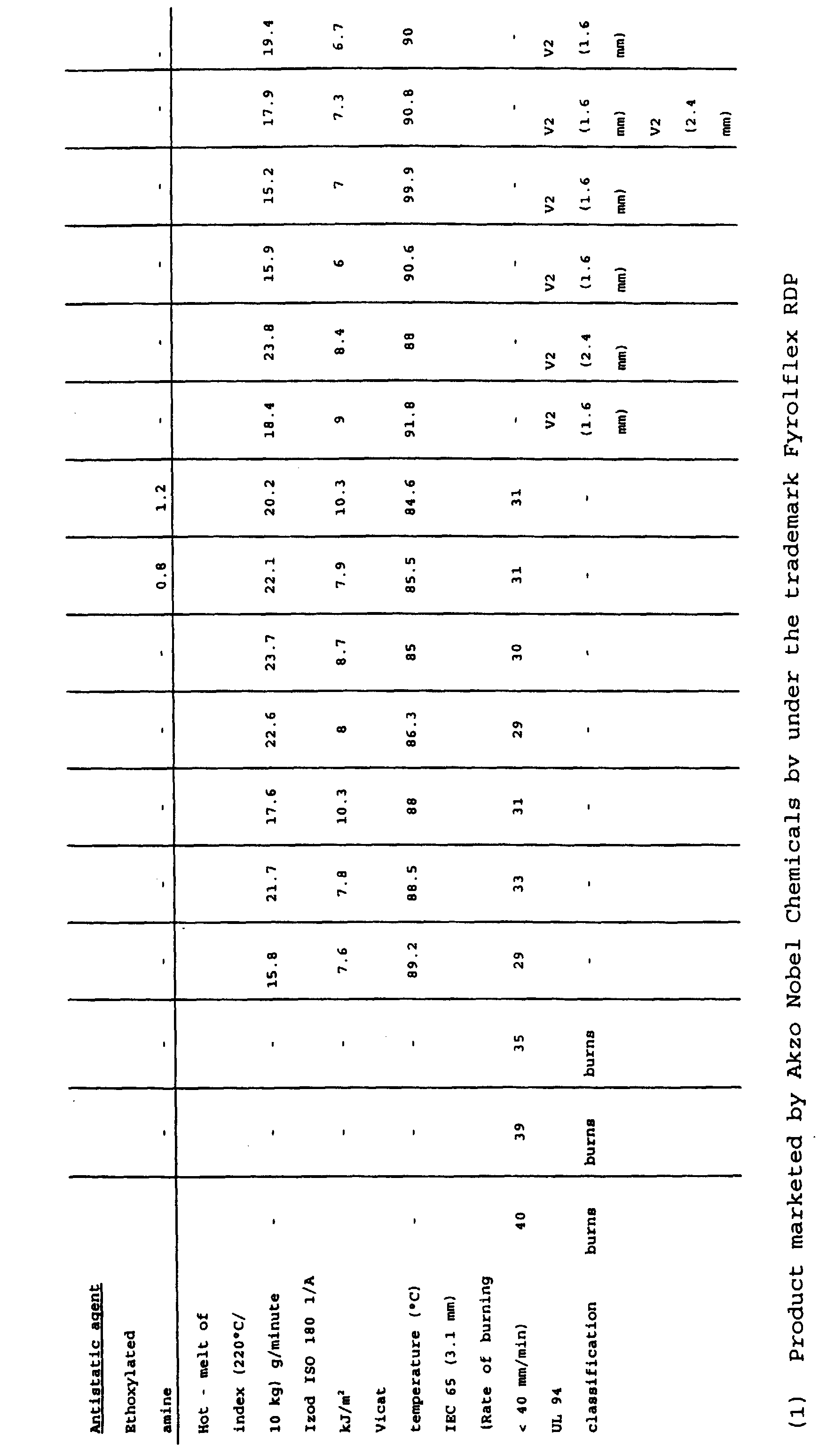

The above examples show that a particularly remarkable flame retardancy of the composition is obtained when a neutralizing agent and a phosphate flame retardant according to the invention are employed simultaneously, even in the case of very small quantities of neutralizing agent and in the absence of any halogen-containing compounds.

## Claims

1. Styrene-based polymer and copolymer composition free from any halogen, characterized in that it includes:
(A) a styrene-based polymer, a styrene-based copolymer or a mixture thereof;
(B) 0.01 to 10 parts by weight, per 100 parts by weight of the component (A), of an agent for neutralizing acidity, chosen from the oxides, the hydroxides and the carbonates of metals of groups II and III of the Periodic Classification of the elements and mixtures thereof; and
(C) 1 to 25 parts by weight, per 100 parts by weight of the component (A), of a flame-retardant phosphate chosen from the phosphates of formula: 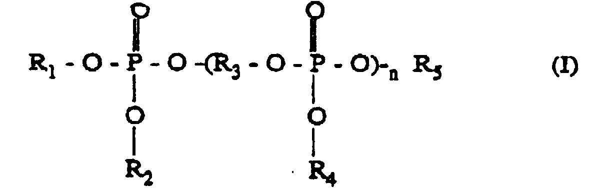
in which R₁, R₂, R₃, R₄ and R₅ are, independently of one another, an aryl group or an aryl group substituted by one or more alkyl and/or hydroxyl groups and n is an integer from 0 to 5, and mixtures thereof.

2. Composition according to Claim 1, characterized in that R₁, R₂, R₃, R₄ and R₅ are C₆-C₁₂ aryl groups or C₆-C₁₂ aryl groups substituted by one or more C₁-C₅ alkyl and/or hydroxyl groups and n is 0 or 1.

3. Composition according to Claim 1, characterized in that the flame-retardant phosphate is chosen from the phosphates of formulae: 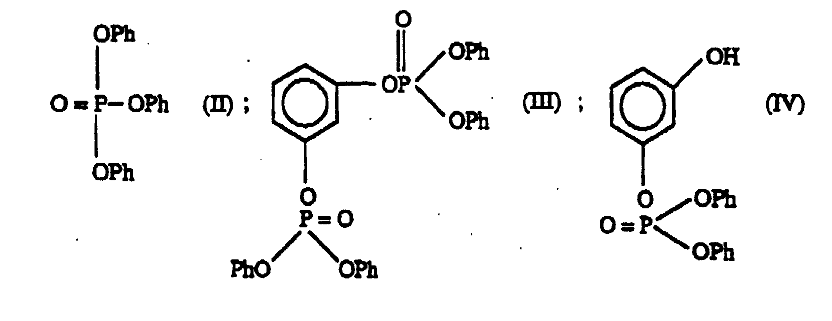 in which Ph denotes a phenyl group, and mixtures thereof.

4. Composition according to any one of claims 1 to 3, characterized in that the component (B) is present in a proportion of 0.05 to 6 parts by weight and component (C) is present in a proportion of 2 to 15 parts by weight.

5. Composition according to any one of the preceding claims, characterized in that the neutralizing agent is chosen from MgOH, MgO, Al₂O₃, Al(OH)₃, MgCO₃, CaCO₃, ZnO, hydrotalcites and mixtures thereof.

6. Composition according to any one of the preceding claims, characterized in that it additionally includes 0 to 10, preferably 0 to 5 parts by weight, per 100 parts by weight of component (A), of an additional flame retardant chosen from boron phosphate (BPO₄) and zinc phosphate.

7. Composition according to any one of the preceding claims, characterized in that it additionally includes one or more adjuvants chosen from lubricants, pigments, dyes, UV stabilizers, antioxidants, antistatic agents, coupling agents, impact strength modifiers and extending and/or reinforcing fillers.

8. Composition according to any one of the preceding claims, characterized in that the component (A) is chosen from homopolystyrenes, alkylstyrene homopolymers, high-impact polystyrenes (HIPS), styrene graft polymers and copolymers and mixtures thereof.

9. Composition according to any one of the preceding claims, characterized in that the component (A) is an acrylonitrile-butadiene-styrene copolymer, a styrene-acrylonitrile copolymer or a mixture thereof.

10. Article obtained by moulding or extrusion of a composition according to any one of Claims 1 to 9.
